Europäisches Patentamt

European Patent Office

Office européen des brevets

(11) Publication number: **0 240 928**
**A2**

(12) **EUROPEAN PATENT APPLICATION**

(21) Application number: **87104844.3**

(22) Date of filing: **02.04.87**

(30) Priority: **07.04.86 US 848865**

(43) Date of publication of application:
**14.10.87 Bulletin 87/42**

(84) Designated Contracting States:
**BE DE ES FR GB IT**

(51) Int. Cl.⁴ **C09D 11/10**

(71) Applicant: **PPG INDUSTRIES, INC.**
**One PPG Place**
**Pittsburgh Pennsylvania 15272(US)**

(72) Inventor: **Makhlouf, Joseph Michael**
**1024 Norton Drive**
**Mars Pennsylvania 16046(US)**
Inventor: **Chau, Michael Ming-kee**
**141 Carters Grove Drive**
**Gibsonia Pennsylvania 15044(US)**
Inventor: **Falk, Frederick Adolf**
**105 Fairview Road**
**Pittsburgh Pennsylvania 15238(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **Lithographic ink compositions.**

(57) Disclosed are lithographic ink compositions comprising a pigment, a solvent and a copolymer characterized in that it is insoluble in an aliphatic hydrocarbon solvent having a kauri-butanol value of less than 28.

EP 0 240 928 A2

## LITHOGRAPHIC INK COMPOSITIONS

### Background of the Invention

Field of the Invention: The present invention relates to acrylic polymers which are useful as binders for quick-setting lithographic inks.

Brief Description of the Prior Art: The use of acrylic polymers as binders for quick-setting lithographic inks is known in the art. Work in this area has continued in search for acrylic polymers that would be quick-setting and dry faster than art-known polymers, and yet provide properties such as gloss, blocking resistance and the like. The prior art has, in the main, relied on high Tg polymers for properties such as block and rub resistance.

Generally, the high Tg polymers require greater amounts of solubilizing hydrocarbon solvents in order to obtain the required solubility for use as lithographic inks. While hydrocarbon solvent solubility is seemingly required for ink properties, it seems to detract from performance properties such as blocking resistance. Apparently, some of the hydrocarbon solvent becomes available under heat and pressure and rewets the soluble polymers of the ink when the printed matter is stacked. This undesirably leads to blocking problems.

The present invention encompasses acrylic polymers which are quick-setting and dry in a remarkably short period of time and yet exhibit excellent characteristics of hardness, gloss, block resistance, rub resistance and other desirable ink properties.

### Summary of the Invention

In accordance with the foregoing, the present invention encompasses a lithographic ink composition comprising a pigment, a solvent and a copolymer which is derived from ethylenically unsaturated monomers. Said copolymer is characterized in that it is essentially insoluble in an aliphatic hydrocarbon solvent having a kauri-butanol value of less than 28. By definition, kauri-butanol value (KB) is the number of milliliters of aliphatic hydrocarbon solvent that is required to cause cloudiness when added to 20 grams of a kauri gum solution which is prepared by dissolving 100 grams of kauri gum in 500 grams of butyl alcohol.

In an improved embodiment, the ink composition encompasses a copolymer as described above wherein at least one of the ethylenically unsaturated monomers contains an acid group which is preferably a carboxyl group which is reacted with an aziridine. Lithographic ink compositions of this invention display improved gloss and blocking resistance without sacrificing set and dry time.

### Detailed Description of the Invention

The copolymers can be prepared by free radical addition polymerization of the monomers described herein. Weight average molecular weight of the copolymers can be about 1000 or higher and typically about 5000 to 50,000, based on polystyrene standards. Typically, the copolymers have a calculated glass transition temperature (Tg) of about 40°C. or higher and preferably about 70°C. to 150°C. The copolymers can be prepared by copolymerizing ethylenically unsaturated monomers, at least one of which can be a carboxyl group-containing monomer. Other monomers which can be copolymerized therewith can be selected principally on the basis that the resultant polymer has the desired Tg as set forth herein.

Examples of the carboxyl group-containing monomers are methacrylic acid, acrylic acid, fumaric acid, maleic acid, itaconic acid, crotonic acid, or a mixture thereof. The carboxyl group-containing monomer is employed typically in amounts greater than 5 percent and preferably from about 7 percent by weight, up to about 25 percent, and more preferably from about 10 to 15 percent by weight based on the total monomer content.

It is believed that the carboxyl group-containing monomers in effective amounts render the resultant copolymer sufficiently polar so as to make it insoluble in aliphatic hydrocarbon solvents of a kauri-butanol level of less than 28. Other monomers such as acrylamides, acrylonitriles and the like can be employed in amounts sufficient to make the resultant copolymer insoluble in aliphatic hydrocarbon solvents having a KB value of less than 28. Of course, the monomer must be such as will not otherwise adversely affect the preparation of the copolymer or the use thereof in accordance with this invention.

The other copolymerizable monomers or a mixture thereof useful herein are selected on the basis of high Tg which in part manifests in good blocking resistance properties. Also, the copolymerizable monomers can be selected on the basis that they impart other desirable ink properties such as flow, wetting and the like. With respect to high Tg, methyl methacrylate, acrylates or methacrylates of cyclic or bicyclic low alcohols or mixtures thereof are typically used. Illustrative examples of these monomers are isobornyl methacrylate, isobornyl acrylate, dicyclopentyl methacrylate, and dicyclopentyl acrylate. Vinyl monomers such as vinyl toluene, p-methylstyrene and styrene can be employed. To impart other ink properties to the copolymer, monomers such as isopropyl methacrylate, isobutyl methacrylate, butyl acrylate or butyl methacrylate or a mixture thereof can be employed. The nature and amount of the other copolymerizable monomers will depend on the desired property.

The solvents useful herein comprise an admixture of non-polar aliphatic hydrocarbon solvents and polar solvents such as oxygenated solvents. The non-polar solvents can have a kauri-butanol value between about 20 to 40 and a boiling range of about 210°C. to 316°C. Typical examples of the aliphatic hydrocarbon can be petroleum distillates or kerosenic solvents. A specific but non-limiting class of non-polar solvents are the Magie oils. The aliphatic hydrocarbon solvents can be used in combination with relatively small proportions of aromatic hydrocarbon solvents.

The oxygenated solvents can be alcohols, amides, ethers, aldehydes, ketones, esters and the like. Generally, the boiling point of the oxygenated solvent is in the same range as that of the aforestated non-polar solvents. A specific example of the polar solvents is tridecanol. Another specific but non-limiting example of the polar solvent can be hexyl cellosolve.

An illustrative example of the admixture of solvent is tridecanol in combination with MAGIESOL-47 or MAGIESOL-52 which is an aliphatic hydrocarbon oil available from Magie Brothers Co., a PENZOIL Co. Division. The non-polar and polar solvents are employed in the ink composition in weight ratios of from about 95:5 to 50:50 and preferably about 70:30 percent of the non-polar to the polar solvent. In accordance with this invention, the admixture of solvents is such that while the copolymer is not soluble in the non-polar solvent, such as MAGIESOL-47 or MAGIESOL-52, it forms a homogeneous mixture with the admixture of solvents. With the above in mind, the skilled artisan should be able to select the non-polar and polar solvents in appropriate ratios in accordance with this invention.

In the preparation of the copolymer, the free radical polymerization can be conducted in the admixture of solvents described herein, or in the non-polar solvent, with the polar solvent being added before final cooling. In the copolymerization, the admixture of solvents is usually heated, followed by simultaneous feeding of a free radical initiator and the copolymerizable monomers. The free radical initiators that are useful herein are those that are soluble in the polymerization medium. Non-limiting examples thereof are peresters, diacylperoxides, peroxyketals, peroxydicarbonates, ketone peroxides, alkyl peroxides, alkyl hydroperoxides, benzopinacols and azo initiators. Some specific examples of the initiators can be tertiary-butyl perbenzoate, ditertiary-butyl peroxide, azobisisobutyronitrile and 2,2'-azobis(2,4-dimethylvaleronitrile). Chain transfer agents such as alkyl mercaptans, e.g., a tertiary-dodecyl mercaptan, isooctyl thioglycolate; alcohols such as benzyl alcohol, isopropyl alcohol, and the like can be used herein. The resultant copolymer has a solids content of 40 to 60, a weight average molecular weight, measured by a polystyrene standard, of about 5000 to 40,000, and preferably 7000 to 15,000, and Tg of about 70°C. to 150°C.

The copolymer by itself or in combination with other binders such as oleoresinous resins can be formulated into a lithographic ink composition by employing therewith pigments, waxes, slip agents, and the like. The amount of the copolymer that is employed in the ink composition ranges from about 5 to 70 percent by weight based on total weight of the resin and pigment. Inks formulated with the copolymers of this invention have been found to have good working properties and transfer properties and most pertinently quick setting and drying, good gloss and good blocking and rub resistance properties.

In the improved embodiment of the invention, the copolymer is reacted with an aziridine preferably with hydroxyethyl ethyleneimine. The reaction with the imine takes place upon mixing the copolymer and the imine and heating the resultant mixture to moderate temperatures of, say, 60° to 150°C., although higher or lower temperatures can be used, depending on the reaction time. The amount of imine reacted is about 0.1 to 5 percent by weight based on the weight of the copolymer. Other methods of preparing an iminated carboxyl-containing copolymer are intended to be covered hereby. For example, a carboxyl-containing monomer can be iminated before it is copolymerized with the other monomers described herein.

The resultant iminated copolymer can have a molecular weight higher than 1000 and typically from about 5000 to 50,000. The calculated Tg is greater than 40°C. and preferably from about 70°C. to 150°C. The iminated copolymer can be employed by itself or with other binders and pigments and additives in preparing lithographic ink compositions. The amount of iminated copolymer that is employed in the composition ranges from about 5 to 70 percent by weight based on the total weight of the resins and pigments in the ink composition. Inks formulated with the iminated copolymers have been found to display a markedly improved misting, gloss and blocking resistance without sacrificing fast set and dry time. Illustratively, lithographic inks prepared with the aziridine-modified copolymer and compatible pigments and commonly used additives can set and dry in 10 minutes or less with the printed matter displaying about a 50 percent gloss on coated paper.

These and other aspects of the invention are further illustrated by the following non-limiting examples.

Example 1

This example illustrates the copolymers of this invention and methods of making and using the same in ink formulations. The following were used in the preparation of the copolymer.

### Charge A

| Ingredients | Parts by Weight (grams) |
| --- | --- |
| MAGIESOL-47[1] | 709 |
| Tridecanol | 236 |

[1] An aliphatic hydrocarbon oil having a flash point of 102°C. (215°F.) and kauri-butanol value of 25.6; it is available from Magie Brothers Oil Co. (PENZOIL Co. Division).

### Charge B

| Ingredients | Parts by Weight (grams) |
| --- | --- |
| Vinyl toluene | 900 |
| Isobutyl methacrylate | 900 |
| Methacrylic acid | 338 |
| Methyl methacrylate | 113 |
| Tertiary-dodecyl mercaptan | 23 |

### Charge C

| Ingredients | Parts by Weight (grams) |
| --- | --- |
| Tertiary-butyl perbenzoate | 68 |
| MAGIESOL-47 | 225 |

### Charge D

| Ingredients | Parts by Weight (grams) |
| --- | --- |
| Tertiary-butyl perbenzoate | 34 |
| MAGIESOL-47 | 68 |

### Charge E

| Ingredients | Parts by Weight (grams) |
| --- | --- |
| MAGIESOL-47 | 272 |
| Tridecanol | 90 |

Charge A was heated in a properly equipped reaction vessel to a temperature of 150°C. under a nitrogen blanket. Addition of Charge C was commenced and within 10 minutes and at 150°C., addition of Charge B was also commenced. After about 3 hours with the addition of Charges C and B completed, the reaction mixture was cooled to 130°C. Charge D was then added to the reaction mixture over the period of about ½ hour and then held at 130°C. for about 2 hours. Charge E was then added to the reaction mixture

4

which was then held over a period of about an hour at a temperature range of about 100-130°C. The resultant mixture comprising the copolymer of this invention had a solids content of about 60 percent based on total composition, a number average molecular weight of 2775 and weight average molecular weight of about 37083.

An ink formulation was prepared with the above copolymer and other ingredients as described hereinbelow.

| Ingredients | Parts by Weight (grams) |
|---|---|
| Flushed Quickset Lithol Rubine | 45 |
| Micronized trifluoroethylene | 1 |
| Micronized polyethylene wax | 2 |
| The above acrylic copolymer[1] | 40 |
| Magie Oil (flash point: 500-600°F.) | 12 |

[1]Ninety (90) grams of the copolymer solution was diluted with 10 grams of tridecanol by mixing the two ingredients and heating them with stirring to homogenize.

The above ingredients were blended with stirring in the order in which they appear above. The resultant blend was thinned with 2 grams of tridecanol. The ink formulation was evaluated as follows.

Misting was tested by placing a piece of plain white paper underneath the rollers of an inkometer while the tack versus time curve was being taken at 1200 revolutions per minute for a period of about 2 minutes. The ink showed almost no misting at all. The inkometer tack results were as follows. After 10 minutes of operating the inkometer at 1200 revolutions per minute at 90°F. (32°C.), the ink had a peak tack measurement of 25.1. The printed ink set and dried in less than 10 minutes.

Blocking resistance was tested by cutting prints of the above printed ink to 2 by 2 inch squares which were then placed in an ink to ink mode and also ink to paper mode and placed under pressure of 120 pounds per square inch in a hot room of 120°F. (49°C.) for a period of 24 hours. When the pressure was removed, the printed inks in the ink to ink mode or ink to paper mode did not stick, thus showing that the ink formulations of this invention have good blocking resistance.

Example 2

This example further illustrates the copolymers of this invention and a method of preparing the same. The following were used in the prepration.

Charge A

| Ingredients | Parts by Weight (grams) |
|---|---|
| MAGIESOL-47 | 495 |
| Tridecanol | 151 |

Charge B

| Ingredients | Parts by Weight (grams) |
|---|---|
| Para-methylstyrene | 450 |
| Isobutyl methacrylate | 450 |
| Methacrylic acid | 113 |
| Isobutyl acrylate | 57 |
| Methyl methacrylate | 57 |
| Tertiary-dodecyl mercaptan | 12 |

Charge C

| Ingredients | Parts by Weight (grams) |
|---|---|
| Tertiary-butyl perbenzoate | 34 |
| MAGIESOL-47 | 113 |

Charge D

| Ingredients | Parts by Weight (grams) |
|---|---|
| Tertiary-butyl perbenzoate | 17 |
| MAGIESOL-47 | 34 |

The method of preparation was essentially the same as described in Example 1. The resultant copolymer had a solids content of 61.1 percent, weight average molecular weight of 8262, number average molecular weight of 3075, and Brookfield viscosity of 200,000 centipoise.

Example 3

This example illustrates the aziridine-modified copolymers of this invention and methods of preparing the same. The following were used in the preparation of the copolymer.

### Charge A

| Ingredients | Parts by Weight (grams) |
|---|---|
| MAGIESOL-47 | 567 |
| Tridecanol | 189 |

### Charge B

| Ingredients | Parts by Weight (grams) |
|---|---|
| Vinyl toluene | 720 |
| Butyl methacrylate | 720 |
| Methacrylic acid | 270 |
| Methyl methacrylate | 90 |
| Tertiary-dodecyl mercaptan | 18 |

### Charge C

| Ingredients | Parts by Weight (grams) |
|---|---|
| Tertiary-butyl perbenzoate | 54 |
| MAGIESOL-47 | 222 |

### Charge D

| Ingredients | Parts by Weight (grams) |
|---|---|
| Tertiary-butyl perbenzoate | 27 |
| MAGIESOL-47 | 54 |

### Charge E

| Ingredients | Parts by Weight (grams) |
|---|---|
| MAGIESOL-47 | 218 |
| Tridecanol | 426 |

Charge A was heated in a properly equipped reaction vessel to a temperature of 150°C. under a nitrogen blanket. Addition of Charge C was commenced and within 10 minutes and at 150°C., addition of Charge B was also commenced. After about 3 hours with the addition of Charges C and B completed, the reaction mixture was cooled to 130°C. Charge D was then added to the reaction mixture over the period of about ½ hour and then held at 130°C. for about 2 hours. Charge E was then added to the reaction mixture which was then held over a period of about an hour at a temperature range of about 86-130°C. The resultant mixture comprising the copolymer of this invention had a solids content of about 55.4 percent based on total composition (measured at 150°C. after 2 hours), a number average molecular weight of 3220, weight average molecular weight of about 8263 and Brookfield viscosity of 76,000 centipoise.

Six hundred (600) grams of the above copolymer were mixed with 6 grams of hydroxyethyl ethyleneimine under a nitrogen blanket and heated to 80°C., held for 2 hours and discharged. The resultant composition comprising the iminated copolymer had a solids content of 55.5 pecent and a Brookfield viscosity of 90,000 centipoise measured with a number 7 spindle.

Example 4

This example further illustrates the aziridine-modified copolymers of this invention and a method of preparing and using the same. The following were used in the preparation of the copolymer.

### Charge A

| Ingredients | Parts by Weight (grams) |
| --- | --- |
| MAGIESOL-47 | 567 |
| Tridecanol | 189 |

### Charge B

| Ingredients | Parts by Weight (grams) |
| --- | --- |
| Vinyl toluene | 720 |
| Isobutyl methacrylate | 720 |
| Methacrylic acid | 270 |
| Methyl methacrylate | 90 |
| Tertiary-dodecyl mercaptan | 18 |

### Charge C

| Ingredients | Parts by Weight (grams) |
| --- | --- |
| Tertiary-butyl perbenzoate | 54 |
| MAGIESOL-47 | 180 |

### Charge D

| Ingredients | Parts by Weight (grams) |
| --- | --- |
| Tertiary-butyl perbenzoate | 27 |
| MAGIESOL-47 | 54 |

The method of preparation was essentially the same as described in Example 1. The resultant copolymer had a solids content of 53.24 percent (at 150°C. for 2 hours), weight average molecular weight of 8666, number average molecular weight of 3299, and Brookfield viscosity of 192,000 centipoise measured with a number 7 spindle.

The iminated copolymer was prepared by reacting 600 grams of the above copolymer at about 55 percent total solids admixed with 6 grams of hydroxyethyl ethyleneimine under a nitrogen blanket and heated to 80°C. to react. The reaction mixture was held at 80°C. for 2 hours and then thinned with 25 grams of a 2:1 mixture of MAGIESOL-47 and tridecanol. The resultant product comprising the iminated reaction product had a resin solids content of 51.64 percent (at 150°C. for 2 hours) and viscosity of 80,000 centipoise measured with a number 7 spindle.

An ink composition was formulated with the above iminated copolymer and other ingredients in essentially the same manner as described in Example 2. The resultant mixture had good ink properties with a 60° gloss of about 52.6 percent for an average of seven prints on a coated paper and good blocking resistance.

## Claims

1. A lithographic ink composition comprising a pigment, a solvent and a copolymer which is derived from ethylenically unsaturated monomers; said copolymer is characterized in that it is insoluble in an aliphatic hydrocarbon solvent having a kauri-butanol level of less than 28.

2. A lithographic ink composition of Claim 1 wherein the solvent comprises a mixture of a non-polar aliphatic hydrocarbon solvent and a polar oxygenated solvent.

8

3. A lithographic ink composition of Claim 2 wherein the non-polar solvent is a Magie Oil and the polar solvent is tridecanol.

4. A lithographic ink composition of Claim 1 wherein the copolymer has a weight average molecular weight of about 5000 to 25,000.

5. A lithographic ink composition of Claim 1 wherein the copolymer has a Tg of about 65°C. or higher.

6. A lithographic ink composition of Claim 1 wherein at least one of the ethylenically unsaturated monomers is an acid group-containing monomer.

7. A lithographic ink composition of Claim 6 wherein the acid group-containing monomer is present in an amount greater than about 5 percent and up to about 25 percent by weight based on the total weight of the monomer.

8. A lithographic ink composition of Claim 7 wherein the acid group-containing monomer is present in an amount of about 10 to 15 percent by weight.

9. A lithographic ink composition of Claim 1 wherein the acid group is an acrylic acid or methacrylic acid.

10. A lithographic ink composition of Claim 6 wherein other copolymerizable monomers are ethylenically unsaturated esters selected from the group consisting of isobutyl methacrylate, 2-butyl methacrylate, isobornyl methacrylate, dicyclopentyl methacrylate, dicyclopentyl acrylate, vinyl aromatic monomers and a mixture thereof.

11. A printed matter which is prepared with the ink composition of Claim 1.

12. In an improved ink composition comprising a copolymer as recited in Claim 6, the improvement comprising reacting the copolymer with about 0.1 to 5 percent by weight of an aziridine.

13. In an improved ink composition of Claim 12 wherein the aziridine compound is hydroxyethyl ethyleneimine.

14. A printed matter which is prepared with the ink composition of Claim 12.